# EUROPEAN PATENT APPLICATION

(11) **EP 4 135 334 A1**
(43) Date of publication of application: **15.02.2023**
(21) Application number: 21190450.3
(22) Date of filing: 09.08.2021
(51) Int. Cl.: H04N 21/258, H04N 21/475, G06F 21/31

(54) **METHOD AND SYSTEM FOR A CROSS MEDIA USER AUTHENTICATION**

(71) Applicant: Deutsche Telekom AG, 53113 Bonn (DE)
(72) Inventor: DAMM, Rickard, 53175 Bonn (DE)
(74) Representative: Raible Deissler Lehmann Patentanwälte PartG mbB

(57) **Abstract**

A method for authenticating a user, wherein a communication device is operated by a user causing an authentication system to generate a verification token and transmit the generated verification token to the user, the communication device receives a token input by the user and transmits the received token to the authentication system and the authentication system, upon receipt of the transmitted token, successfully authenticates the user when the received token matches the transmitted verification token; and an authentication system for authenticating a user.

## Description

The invention relates to a method for authenticating a user, wherein a communication device is operated by a user causing an authentication system to generate a verification token and transmit the generated verification token to the user, the communication device receives a token input by the user and transmits the received token to the authentication system, and the authentication system, upon receipt of the transmitted token, successfully authenticates the user when the received token matches the transmitted verification token. Furthermore, the invention relates to an authentication system for authenticating a user.

Authentication methods as specified above are well known in the state of the art and widely used for authenticating users, i.e. for ensuring that an action, e.g. a confirmation, is executed indeed by the alleged user. An authentication system may authenticate a user by transmitting an at least temporarily unique verification token to the user and compare a token promptly input by the user with the transmitted verification token. When the input token matches the transmitted verification token, the user is considered to be authentic.

Televisions, i.e. devices comprising a receiver for receiving a video signal and converting the received video signal and a screen for displaying the converted video signal, are commonly used. A television is usually optimized for receiving and displaying a video stream. Transmitting data, in contrast, is not essential to a television.

As a consequence, primary functions, e.g. starting and stopping the video stream, adjusting a sound of the video stream and the like, are very easy to access by operating a remote control of the television while secondary functions, e.g. inputting data, are rather difficult to access by means of the remote control.

Modern televisions may connect to a television service providing a plurality of video streams to select from some of which may be subject to a payment for purchase or rent. Apart from that, the television service generally provides a customer service supporting users of the television service in solving technical problems related to the television service and/or to the television.

The television service, hence, is very interested in authenticating a user accessing a video stream to be paid for or a user accessing the customer service of the television service for being supported, i.e. initiating a support call. However, operating a remote control of a television is rather tedious when a secondary function like user authentication is concerned. Particularly, inputting a text by means of a remote control is cumbersome and error-prone. Accordingly, there is no way for the television service to comfortably and securely authenticate the user.

Apart from that, other operations involving the television, e.g. linking the television with another device of the user, also require the user to be authenticated.

It is, therefore, a technical object of the invention to suggest a method for authenticating a user which allows for authenticating the user by means of a television comfortably and securely. Another technical object of the invention is providing an authentication system for authenticating a user.

One aspect of the invention is a method for authenticating a user, wherein a communication device is operated by a user causing an authentication system to generate a verification token and transmit the generated verification token to the user, the communication device receives a token input by the user and transmits the received token to the authentication system and the authentication system, upon receipt of the transmitted token, successfully authenticates the user when the received token matches the transmitted verification token. The communication device is used by the user both for initiating the authentication process and for providing authentication data during the authentication process. In other words, the communication device plays an important role in the authentication method.

The authentication system authenticates the user by means of the verification token. The user perceives the transmitted verification token and inputs a token corresponding to the perceived verification token into the communication device. The communication device directly or indirectly forwards the input token to the authentication system.

It is noted, that matching means a predetermined correspondence of the input token and the verification token. The predetermined correspondence may comprise an identity or at least a sufficient similarity of the input token and the verification token and even involve a transformation of the input token to provide the identity or at least the sufficient similarity.

In contrast, the user is not authenticated when the received token does not match the transmitted verification token.

According to the invention, causing the authentication system to generate the verification token and transmit the generated verification token to the user comprises the steps: a television service is caused to transmit an authentication request to the authentication system, the authentication system, upon receipt of the authentication request, generates the verification token and transmits a verification request comprising the generated verification token and a timestamp to a television of the user connected to the television service; and the television, upon receipt of the verification request, displays the verification token on a screen of the television. The authentication service may be accessed by the television service by means of an application programming interface (API).

In other words, the user causes the television service connected to by the television to initiate the authentication process and perceives the verification token from the screen of the television. While the television only displays the verification token and, hence, has not to be operated by the user during the authentication process, the user only operates the communication device for being authenticated. The communication device is optimized for a bidirectional communication and, hence, allows the user for inputting a text comfortably.

Moreover, two different devices, namely the communication device and the television of the user, are involved in the authentication process which additionally are required to be arranged close to each other. Involving two different devices arranged close to each other provides a high security of the authentication process.

Preferably, generating the verification token comprises randomly selecting at least two items out of a plurality of predetermined items and combine the selected at least two items to form the generated verification token. Selecting more than one item results in a larger plurality of possible combinations of the selected items, i.e. verification tokens. The larger plurality of possible combinations favors a temporary uniqueness of the generated verification token on the one hand. On the other hand, a smaller plurality of predetermined items is required.

In an embodiment, a word is selected and displayed as the item. The word is represented by few bytes and, hence, requires little memory space and transmission capacity.

In another embodiment, an image is selected and displayed as the item. The image is represented by a larger plurality of bytes as compared with the word and, hence requires more memory space and transmission capacity than the word. Images may be perceived even by illiterate people. Of course, the verification token may comprise both a word and an image, i.e. be a combination of a word and an image.

The user may input a word corresponding to the displayed image. The image may be referred to by a single word when the image is an easy symbolic icon. The image requires the user to an intellectual activity in order to transform the perceived image into the input word. The necessary intellectual activity further increases the security of the authentication process.

In a preferred embodiment, exactly two items or exactly four items are selected for generating the verification token. Two items will generally be sufficient for forming a sufficient plurality of possible verification tokens. In special circumstances only four items might be sufficient for favoring the temporary uniqueness of the generated verification token.

Advantageously, transmitting the authentication request is caused by operating a phone or by operating a voice assistant as the communication device. The user may operate the phone when a support call is to be initiated. A support person of the television service answers the phone and manually causes the television service to initiate the authentication process. The user perceives the verification token displayed on the screen of the television and speaks the verification token into the phone. The support person perceives the spoken verification token and successfully authenticates the user when the perceived verification token spoken by the user matches the transmitted verification token. The support person manually initiates the support call upon a successful authentication of the user.

Alternatively the user may operate a voice assistant as the communication device. The user may operate the voice assistant, i.e. speak to the voice assistant, when the television is to be linked to the voice assistant. The voice assistant couples to the authentication system and automatically causes the television service to initiate the authentication process. The user perceives the verification token displayed on the screen of the television and speaks the verification token into the voice assistant. The voice assistant perceives the spoken verification token and successfully authenticates the user when the perceived verification token spoken by the user matches the transmitted verification token. The voice assistant automatically links the television to the voice assistant upon a successful authentication of the user.

Of course, the communication device may alternatively be a smartphone, a tablet, a notebook, a desktop computer and the like. And the user may type the input token using a keyboard or a keypad of the communication device. Generally spoken, any terminal device capable for receiving and transmitting the input token may be used as the communication device.

In a favorable embodiment, the television, upon a successful authentication allows for being remotely accessed via the television service and/or the television, upon a successful authentication, transmits metadata of the television and/or the user or an operational context of the television to the television service. The service person of the television service may be granted a remote access to the television upon a successful authentication. The remote access allows for the service person to immediately affect the television for solving a problem concerning the television service and/or the television and, hence, allows for a very efficient problem solution.

Transmitted metadata, e.g. a type, a screen resolution and the like, or a transmitted context of the television, e.g. an actual source setting, an actual network setting and the like, may help the service person in analyzing a problem concerning the television service and/or the television and, hence, strongly facilitates solving the problem. Transmitted metadata of the user may help the service person to offer adequate services to the user.

The television, upon receipt of the verification request, may display a validity interval on the screen. The validity interval allows for the user to input the token to the communication device in peace, i.e. without any stress or hurry, and also repeat inputting the token if required, e.g. when the user failed to correctly input the token due to an operation error.

Particularly, the television continuously updates the displayed validity interval depending on the timestamp. A count-down is displayed indicating the remaining time for inputting the token. Displaying a count-down relieves the user from any stress or hurry when operating the communication device.

Advantageously, the authentication system generates and transmits another verification token when the validity interval expires. The other verification token still allows for a successful authentication when the user misses the validity interval.

Favorably, the user is authenticated when the transmitted token is received by the authentication system within the validity interval. The receipt of the token within the validity interval imposes another condition on a successful authentication and, hence, further increases a security of the authentication process.

In many embodiments, the user is authenticated for accepting a support call of the user executed by phone, for linking the television with a voice assistant of the user or for confirming an order of the user accomplished by phone. These applications of the invention are exemplarily only and do not restrict the scope of the invention.

Of course, the television may connect to the television service via a set top box. A traditional television may not be capable for connecting to the television service. However, connecting the traditional television to the set top box allows the television for connecting to the television service. In other words, the television as defined herein may comprise the set top box.

Another aspect of the invention is system for authenticating a user, comprising a television service, a television connected to the television service and a communication device. The communication device is different and separate from the television. The specified components are widely used. Thus, a very plurality of systems may be formed thereof resulting in a broad applicability of the invention.

According to the invention, the system is configured for carrying out a method according to the invention. Due to the configuration the system provides a comfortable and secure way for authenticating a user involving a television.

It is an essential advantage of the method according to the invention, that a user may be authenticated comfortably and securely using a television. Due to the comfortable and secure authentication a customer service of a television service is enabled to efficiently support the user as well as reliably receive payments or orders from the user. Moreover, the comfortable and secure authentication facilitates linking the television to communication devices.

It shall be understood that the features described previously and to be described subsequently may be used not only in the indicated combinations but also in different combinations or on their own without leaving the scope of the present invention.

The invention is described in detail by means of an exemplary embodiment and with reference to the drawings. Like components are indicated by like reference numerals throughout the drawings.
- Fig. 1: schematically shows an entity diagram of a system according to the invention for authenticating a user;
- Fig. 2: schematically shows the television of the system shown in Fig. 1 displaying a different verification token.

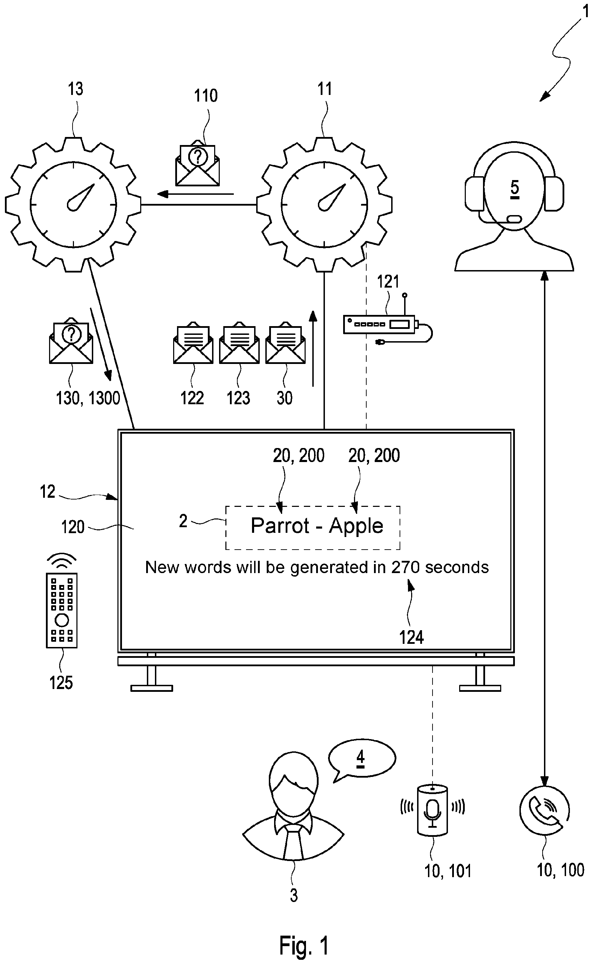

Fig. 1 shows a system for authenticating a user 3 according to the invention. The system comprises a television service 11, a television 12 connected to the television service 11, a communication device 10 and an authentication system 13. The television 12 may be connected to the television service 11 immediately or via a set top box 121.

The system is configured for carrying out the following method for authenticating the user 3. For instance, the user 3 may be authenticated for accepting a support call of the user 3 executed by a phone 100 as the communication device 10, for linking the television 12 with a voice assistant 101 of the user 3 as the communication device 10 or for confirming an order of the user 3 accomplished by the phone 100.

The communication device 10 is operated by the user 3 causing the television service 11 to transmit an authentication request 110 to the authentication system 13. Transmitting the authentication request 110 may be caused by operating a phone 100 or by operating a voice assistant 101 as the communication device 10.

The authentication system 13, upon receipt of the authentication request 110, generates a verification token 2 and transmits a verification request 130 comprising the generated verification token 2 and a timestamp 1300 to the television 12 of the user 3 connected to the television service 11.

Generating the verification token 2 comprises randomly selecting at least two items 20 out of a plurality of predetermined items 20 and combine the selected at least two items 20 to form the generated verification token 2. A word 200 may be selected and displayed as the item 20. Preferably, exactly two items 20 or exactly four items 20 are selected for generating the verification token 2.

The television 12, upon receipt of the verification request 130, displays the verification token 2 on a screen 120 of the television 12. The television 12, upon receipt of the verification request 130, may further display a validity interval 124 on the screen 120. Preferably, the television 12 continuously updates the displayed validity interval 124 depending on the timestamp 1300. The authentication system 13 advantageously generates and transmits another verification token 2 when the validity interval 124 expires.

The communication device 10 receives a token 4 input by the user 3 causing the received token 4 to be transmitted to the authentication system 13. The user 3 may input a word corresponding to the displayed image 201 when the image 201 is displayed as the item 20.

The authentication system 13, upon receipt of the transmitted token 4, successfully authenticates the user 3 when the received token 4 matches the transmitted verification token 2 and transmits an authentication confirmation to the television service 11. The user 3 may also be authenticated when the transmitted token 4 is additionally received by the authentication system 13 within the validity interval 124.

The television 12, upon a successful authentication, may allow for being remotely accessed via the television service 11. Additionally or alternatively, the television 12, upon a successful authentication, may transmit metadata 122, 30 of the television 12 and/or the user 3 or an operational context 123 of the television 12 to the television service 11.

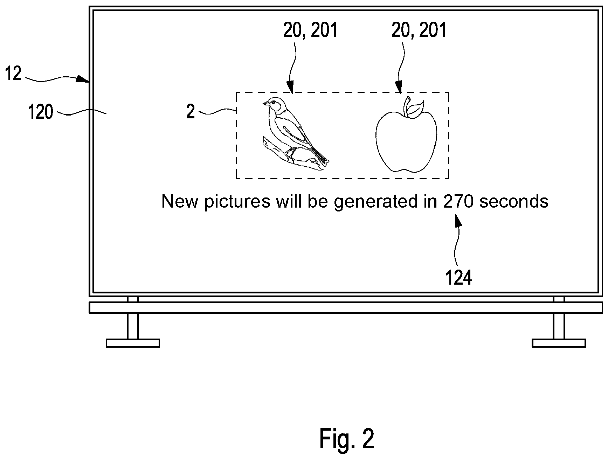

Fig. 2 schematically shows the television 12 of the system 1 shown in Fig. 1 displaying a different verification token 2. An image 201 is selected and displayed as the item 20. Of course, items 20 of different categories may be mixed.

### Reference numerals

- 1: system for authenticating a user
- 10: communication device
- 100: phone
- 101: voice assistant
- 11: television service
- 110: authentication request
- 12: television
- 120: screen
- 121: set top box
- 122: metadata
- 123: operational context
- 124: validity interval
- 125: remote control
- 13: authentication system
- 130: verification request
- 1300: timestamp
- 2: verification token
- 20: item
- 200: word
- 201: image
- 3: user
- 30: metadata
- 4: input token
- 5: service person

## Claims

1. A method for authenticating a user (3), wherein
- a communication device (10) is operated by a user (3) causing a television service (11) to transmit an authentication request (110) to an authentication system (13);
- the authentication system (13), upon receipt of the authentication request (110), generates a verification token (2) and transmits a verification request (130) comprising the generated verification token (2) and a timestamp (1300) to a television (12) of the user (3) connected to the television service (11);
- the television (12), upon receipt of the verification request (130), displays the verification token (2) on a screen (120) of the television (12);
- the communication device (10) receives a token (4) input by the user (3) causing the received token (4) to be transmitted to the authentication system (13);
- the authentication system (13), upon receipt of the transmitted token (4), successfully authenticates the user (3) when the received token (4) matches the transmitted verification token (2) and transmits an authentication confirmation to the television service (11).

2. The method according to claim 1, wherein generating the verification token (2) comprises randomly selecting at least two items (20) out of a plurality of predetermined items (20) and combine the selected at least two items (20) to form the generated verification token (2).

3. The method according to claim 2, wherein a word (200) is selected and displayed as the item (20).

4. The method according to claim 2 or 3, wherein an image (201) is selected and displayed as the item (20).

5. The method according to claim 4, wherein the user (3) inputs a word corresponding to the displayed image (201).

6. The method according to one of claims 2 to 5, wherein exactly two items (20) or exactly four items (20) are selected for generating the verification token (2).

7. The method according to one of claims 1 to 6, wherein transmitting the authentication request (110) is caused by operating a phone (100) or by operating a voice assistant (101) as the communication device (10).

8. The method according to one of claims 1 to 7, wherein the television (12), upon a successful authentication, allows for being remotely accessed via the television service (11) and/or the television (12), upon a successful authentication, transmits metadata (122, 30) of the television (12) and/or the user (3) or an operational context (123) of the television (12) to the television service (11).

9. The method according to one of claims 1 to 8, wherein the television (12), upon receipt of the verification request (130), displays a validity interval (124) on the screen (120).

10. The method according to claim 9, wherein the television (12) continuously updates the displayed validity interval (124) depending on the timestamp (1300).

11. The method according to claim 9 or 10, wherein the authentication system (13) generates and transmits another verification token (2) when the validity interval (124) expires.

12. The method according to one of claims 9 to 11, wherein the user (3) is authenticated when the transmitted token (4) is received by the authentication system (13) within the validity interval (124).

13. The method according to one of claims 1 to 12, wherein the user (3) is authenticated for accepting a support call of the user (3) executed by phone (100), for linking the television (12) with a voice assistant (101) of the user (3) or for confirming an order of the user (3) accomplished by phone (100).

14. The method according to one of claims 1 to 13, wherein the television (12) connects to the television service (11) via a set top box (121).

15. A system for authenticating a user (3), comprising a television service, a television (12) connected to the television service (11), a communication device (10) and an authentication system (13) and being configured to carry out a method according to claims 1 to 14.

## Amended claims

### Amended claims in accordance with Rule 137(2) EPC.

1. A method for authenticating a user (3), wherein
- a communication device (10) is operated by the user (3) causing a television service (11) to transmit an authentication request (110) to an authentication system (13);
- the authentication system (13), upon receipt of the authentication request (110), generates a verification token (2) and transmits a verification request (130) comprising the generated verification token (2) and a timestamp (1300) to a television (12) of the user (3) connected to the television service (11);
- the television (12), upon receipt of the verification request (130), displays the verification token (2) on a screen (120) of the television (12);
- the communication device (10) receives a token (4) input by the user (3) causing the received token (4) to be transmitted to the authentication system (13);
- the authentication system (13), upon receipt of the transmitted token (4), successfully authenticates the user (3) when the received token (4) matches the transmitted verification token (2) and transmits an authentication confirmation to the television service (11).

2. The method according to claim 1, wherein generating the verification token (2) comprises randomly selecting at least two items (20) out of a plurality of predetermined items (20) and combine the selected at least two items (20) to form the generated verification token (2).

3. The method according to claim 2, wherein a word (200) is selected and displayed as the item (20).

4. The method according to claim 2 or 3, wherein an image (201) is selected and displayed as the item (20).

5. The method according to claim 4, wherein the user (3) inputs a word corresponding to the displayed image (201).

6. The method according to one of claims 2 to 5, wherein exactly two items (20) or exactly four items (20) are selected for generating the verification token (2).

7. The method according to one of claims 1 to 6, wherein transmitting the authentication request (110) is caused by operating a phone (100) or by operating a voice assistant (101) as the communication device (10).

8. The method according to one of claims 1 to 7, wherein the television (12), upon a successful authentication, allows for being remotely accessed via the television service (11) and/or the television (12), upon a successful authentication, transmits metadata (122, 30) of the television (12) and/or the user (3) or an operational context (123) of the television (12) to the television service (11).

9. The method according to one of claims 1 to 8, wherein the television (12), upon receipt of the verification request (130), displays a validity interval (124) on the screen (120).

10. The method according to claim 9, wherein the television (12) continuously updates the displayed validity interval (124) depending on the timestamp (1300).

11. The method according to claim 9 or 10, wherein the authentication system (13) generates and transmits another verification token (2) when the validity interval (124) expires.

12. The method according to one of claims 9 to 11, wherein the user (3) is authenticated when the transmitted token (4) is received by the authentication system (13) within the validity interval (124).

13. The method according to one of claims 1 to 12, wherein the user (3) is authenticated for accepting a support call of the user (3) executed by phone (100), for linking the television (12) with a voice assistant (101) of the user (3) or for confirming an order of the user (3) accomplished by phone (100).

14. The method according to one of claims 1 to 13, wherein the television (12) connects to the television service (11) via a set top box (121).

15. A system for authenticating a user (3), comprising a television service, a television (12) connected to the television service (11), a communication device (10) and an authentication system (13) and being configured to carry out a method according to claims 1 to 14.
